# EUROPÄISCHE PATENTSCHRIFT

(11) **EP 3 398 692 B1**
(45) Veröffentlichungstag und Bekanntmachung des Hinweises auf die Patenterteilung: **18.12.2019**
(21) Anmeldenummer: 17169614.9
(22) Anmeldetag: 05.05.2017
(51) Int. Cl.: B06B 1/16, B65B 3/00

(54) **VERFAHREN ZUR HERSTELLUNG VON PASTÖSEN NAHRUNGSMITTELN MIT VERMINDERTER ABSCHEIDUNG VON DARIN ENTHALTENEN FLÜSSIGKEITEN**
METHOD FOR THE MANUFACTURE OF PASTY FOOD PRODUCTS WITH REDUCED DEPOSITION OF LIQUIDS CONTAINED IN SAME
PROCÉDÉ DE FABRICATION D'ALIMENTS PÂTEUX AU MOYEN DE LA SÉPARATION RÉDUITE DE LIQUIDES CONTENUS EN LEUR SEIN

(43) Veröffentlichungstag der Anmeldung: 07.11.2018
(73) Patentinhaber: DMK Deutsches Milchkontor GmbH, 27404 Zeven (DE)
(72) Erfinder: Holsten, Anneke, 27383 Scheeßel (DE); Kretzschmar, Heike, 27419 Sittensen (DE); Schomacker, Marina, 27419 Sittensen (DE); Steffens, Rolf, 27404 Zeven (DE)
(74) Vertreter: Fabry, Bernd

(56) Entgegenhaltungen:
- EP-A1- 0 658 382
- GB-A- 1 053 051
- US-A- 2 789 588

## Beschreibung

### GEBIET DER ERFINDUNG

Die Erfindung befindet sich auf dem Gebiet der Molkereiprodukte und betrifft ein Verfahren, mit dessen Hilfe die Abscheidung von Flüssigkeiten aus Weißkäse oder Speisequark vermindert werden kann.

### STAND DER TECHNIK

Pastöse Lebensmittel zeichnen sich dadurch aus, dass sie Flüssigkeit in einem halbfesten Netzwerk gespeichert halten, die im Laufe der Lagerung nach und nach entweicht und sich auf dem Boden der Verpackung sammelt. Bei der Herstellung von Speisequark beispielsweise wird nach Dicklegung der Milch die überstehende Molke vom Quark abgetrennt. Dabei verbleibt jedoch ein geringer Molkenanteil im Produkt. Dieser kann vermindert werden, indem man die Quarkmasse beispielsweise in Tücher packt und die Molke abtropfen lässt oder Molke aus dem Produkt abpresst. Die erste Variante ist zeitaufwendig, die zweite schadet der Textur des Quarks, beide Alternativen führen zudem nicht zu einer vollständigen Abtrennung. Im Laufe der Lagerung wird die noch im Produkt enthaltene Molke abgeschieden, was als "Molkenlässigkeit" bezeichnet wird.

Ein Verbraucher erwartet jedoch beim Öffnen einer Speisequarkpackung, dass das Produkt molkenfrei ist, denn abgesehen vom optischen Erscheinungsbild wird Molke nicht unbedingt als wertgebender Inhaltsstoff betrachtet und daher vor dem Verzehr abgekippt.

Molkenlässigkeit ist daher auch ein Qualitätsmerkmal gemäß den Prüfungsbestimmungen für Milch und Milchprodukte der Deutschen Lebensmittelgesellschaft (DLG). DLGprämierte Produkte dürfen entsprechend gekennzeichnet bzw. ausgelobt werden. In vielen Fällen werden Produkte, die eine solche Zertifizierung nicht vorweisen können, gar nicht erst in den Handel übernommen, was verdeutlicht, dass die Herstellung insbesondere vonn Speisequark mit minimierter Molkenlässigkeit auch von hohem wirtschaftlichem Interesse ist.

Aus der DE 1909199 A1 (GERVAIS) ist bereits ein Verfahren bekannt, mit dessen Hilfe die Molkenlässigkeit von Frischkäse verbessert werden kann: dazu wird die dickgelegte Milch mit Ultraschall behandelt und dann in Quark und Molke getrennt. In der Praxis erweist sich eine Ultraschallbehandlung jedoch nicht als ausreichend, um ein Produkt herzustellen, das nach DLF zertifiziert werden kann. US 2 789 588 offenbart ein Verfahren um Molkereiprodukte herzustellen.

Die Aufgabe der vorliegenden Erfindung hat daher darin bestanden, ein möglichst einfaches Verfahren bereitzustellen, mit dessen Hilfe man die Abscheidung von Flüssigkeiten aus Weißkäse bzw. Speisequark deutlich vermindern kann.

### BESCHREIBUNG DER ERFINDUNG

Ein erster Gegenstand der Erfindung betrifft ein Verfahren zur Herstellung von Weißkäse oder Speisequark mit verminderter Abscheidung von darin enthaltenen Flüssigkeiten, umfassend die folgenden Schritte:
(a) Bereitstellen eines Weißkäses oder eines Speisequarks mit einer darin enthaltenen Menge an eingeschlossener Flüssigkeit und
(b) Abfüllen des Weißkäses oder des Speisequarks in die Endverpackung, welches sich dadurch auszeichnet, dass man während der Abfüllung Schwingungsenergie mit einer Frequenz im Bereich von 10 bis 1.000 Hz in den Weißkäse oder den Quark einträgt.

Der vorliegenden Erfindung liegt die überraschende Erkenntnis zugrunde, dass Speisequark, dessen Füllbild plan verläuft, gegenüber gleichen Produkten, die nach Befüllung einen Dosierkegel zeigen, keine oder allenfalls eine sehr geringe Molkenlässigkeit aufweist.

Hierzu muss man wissen, dass Weißkäse oder Speisequark physikochemisch betrachtet eine hoch scherempfindliche, plastische Mikropartikeldispersion darstellt. Bei der automatischen Abfüllung dosiert die Fülldüse die Masse direkt in die Verkaufseinheit, wobei die Düse während dieses Vorgangs eine vertikale Bewegung vornimmt. Als Füllbild ergibt sich dadurch in Abhängigkeit von der Dosiertülle mindestens ein Dosierkegel.

Die Anmelderin hat aus ihren Beobachtungen den Schluss gezogen, dass es zur Verminderung der Molkenlässigkeit wünschenswert ist, Weißkäse oder Speisequark in solcher Weise abzufüllen, dass sich abweichend vom bisherigen Stand der Technik ein planes Füllbild ergibt. In diesem Zusammenhang wurde gefunden, dass sich ein solches Füllbild erzielen lässt, wenn man während der Abfüllung Schwingungsenergie in die Masse einträgt.

Vorzugsweise wird in die Masse Schwingungsenergie mit sinusförmigem Verlauf eingetragen, wobei diese mit horizontalen und/oder vertikalen Schwingungen erfolgen kann; bevorzugt sind horizontale und vertikale Schwingungen, die zur gleichen Zeit erfolgen. Die Frequenz der Schwingungen liegt im Bereich von 10 bis 1.000 Hz und insbesondere etwa 20 bis 70 Hz liegen. Dabei wird Weißkäse oder Speisequark - vorzugsweise beim Durchgang durch die Fülldüse - beispielsweise über einen Zeitraum von 1 bis 30 Sekunden, insbesondere etwa 5 bis 15 Sekunden den Vibrationen ausgesetzt.

Die Art und Weise wie die Vibrationen erzeugt bzw. die Schwingungsenergie in die Masse eingetragen wird, hat einen Einfluss auf die Menge an Molke, die noch ausgeschieden wird. So hat sich beispielsweise Ultraschall als wenig wirksam erwiesen. Im Hinblick darauf aber, dass die Abfüllung mit gängigen Hochleistungsfüllmaschinen erfolgen sollte, die nur in geringem Umfang nachgerüstet werden können, hat es sich umgekehrt als vorteilhaft erwiesen, die Schwingungsenergie mit Hilfe eines frei schwingenden, selbstumlaufenden Kolbens (der Teil der Hochleistungsabfüllmaschine ist) in die Masse einzutragen. Dabei lässt sich die Frequenz, mit der der Kolben schwingt, in einfacher Weise durch Druckluft und die Breite, mit der der Kolben schwingt, durch Auflagegewichte auf den Kolben steuern.

Abschließend können die Endverpackungen falls gewünscht entweder einzeln oder nach Einsetzen in eine Transportpalette gerüttelt werden, beispielsweise unter Einsatz einer konventionellen Rüttelvorrichtung wie sie beispielsweise in der EP 0658382 A1 (NETTER) beschrieben wird.

### GEWERBLICHE ANWENDBARKEIT

Ein weiterer Gegenstand der Erfindung betrifft Hochleistungsabfüllmaschine, die sich dadurch auszeichnet, dass sie über einen frei schwingenden, selbstumsteuernden Kolben zur Eintragung von Schwingungsenergie in die abzufüllende Masse verfügt.

### BEISPIELE

### BEISPIEL 1, VERGLEICHSBEISPIEL V1 Vibrationsbehandlung von Speisequark

Speisequark mit einem Fettanteil von 40 Gew.-% wurde zum einen in einer konventionellen kontinuierlich betriebenen Hochleistungsdosiereinrichtung in Endverpackungen abgefüllt und zum anderen in einer gleichartigen Vorrichtung, in der über einen frei schwingenden, selbstumsteuernden Kolben Schwingungsenergie (Vibration) über einen Zeitraum von weniger als 10 Sekunden pro Verpackungseinheit eingetragen wurde. Während die konventionellen Produkte einen ausgeprägten Dosierkegel zeigten, waren die erfindungsgemäßen Produkte praktisch plan. Jeweils 12 auf diese Weise hergestellte Muster zu 250 g wurden verpackt und in einer Palette 2 Tage gelagert. Anschließend wurden die Packungen geöffnet und die Menge an freigesetzter Molke bestimmt: bei den konventionellen Produkten lag die Menge im Durchschnitt bei 10 ml pro 250 g Speisequark, bei den erfindungsgemäßen Produkten bei unter 5 ml.

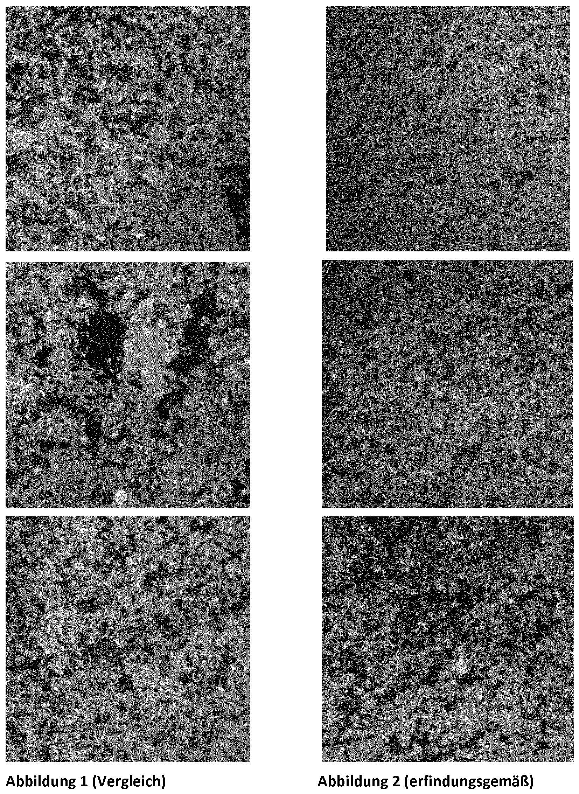

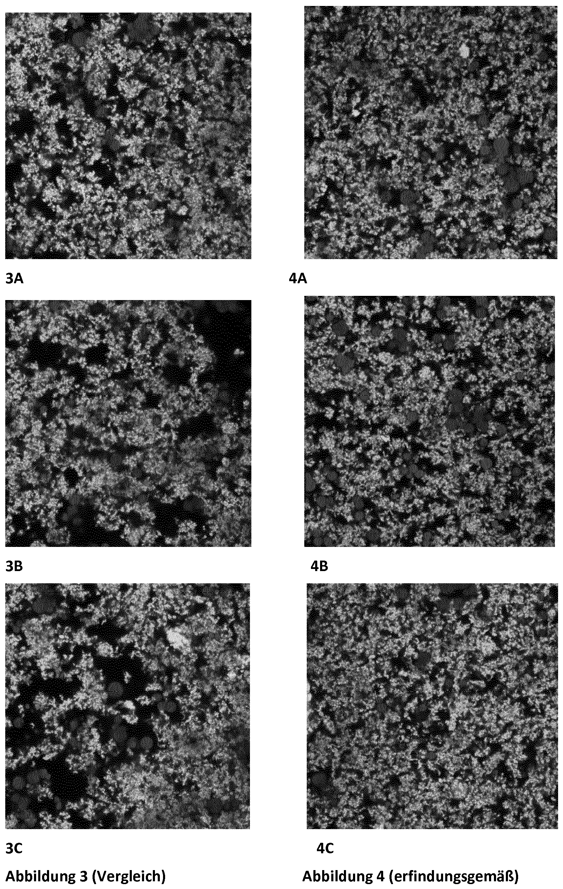

Anschließend wurden mit Hilfe eines Konfokalmikroskops Mikrophotographien der Produkte angefertigt. Dazu wurde Probenmaterial aus jeder Verpackung entnommen und auf einen Objektträger gegeben. Von jeder Probe wurden drei Bilder von unterschiedlichen Stellen aufgenommen (**Abbildungen 1 bis 4**). Bei den Aufnahmen, die mit einem 20er Objektiv gemacht wurden, beträgt die Bildkantenlänge 319,5 x 319,5 µm, bei den Aufnahmen mit 63er Objektiv 101,4 x 101,4 µm.
**Abbildung 1****:** Standard (20er)
**Abbildung 2****:** Erfindungsgemäß (20er)
**Abbildung 3****:** Standard (63er)
**Abbildung 4****:** Erfindungsgemäß (63er)

Die hellen Flächen entsprechen Protein, die dunklen Fett, Luft, Molke sowie insbesondere Hohlräumen in der Struktur.

In den Hohlräumen befindet sich die Molke, die aufgrund eines Schwamm ähnlichen Gerüstaufbaus des Speisequarks über den Zeitraum der Produktlebensdauer durch die Kapillarkräfte von oben nach unten wandert und dann zu einer Abscheidung am Boden der Verpackungseinheit führt.

Der photographische Vergleich zeigt, dass bedingt durch den Eintrag von Schwingungsenergie der Speisequark verdichtet wird und Zahl und Größe der Hohlräume kleiner werden, wodurch die Molkenabscheidung vermindert wird.

### BEISPIEL 2, VERGLEICHSBEISPIEL V2 Vibrationsbehandlung von Magerquark

Beispiel 1 und Vergleichsbeispiel V1 wurden mit Magerquark wiederholt. Bei den konventionellen Produkten lag die Menge im Durchschnitt bei 10 ml pro 250 g Speisequark, bei den erfindungsgemäßen Produkten bei unter 3 ml. Auch hier wurden wieder Mikrofotographien gemacht:

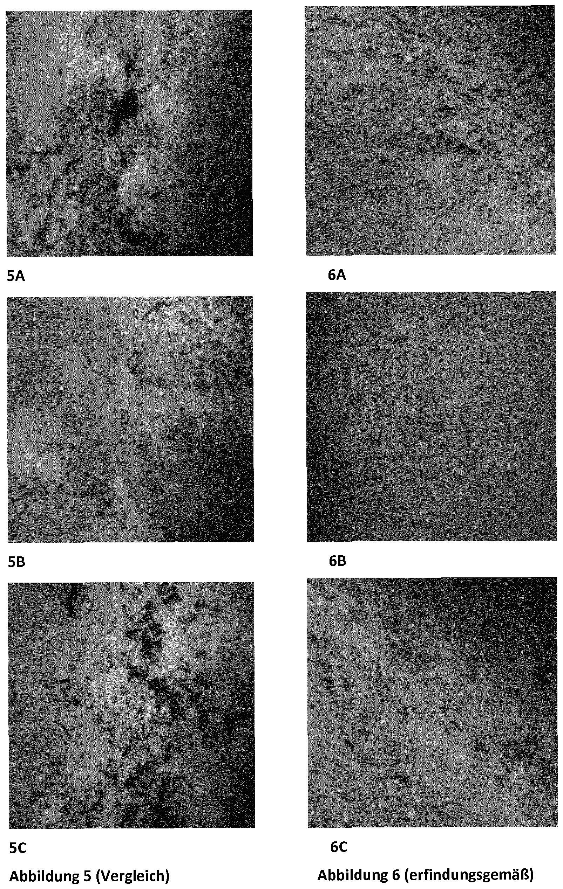

**Abbildung 5****:** Standard (20er)
**Abbildung 6****:** Erfindungsgemäß (20er)

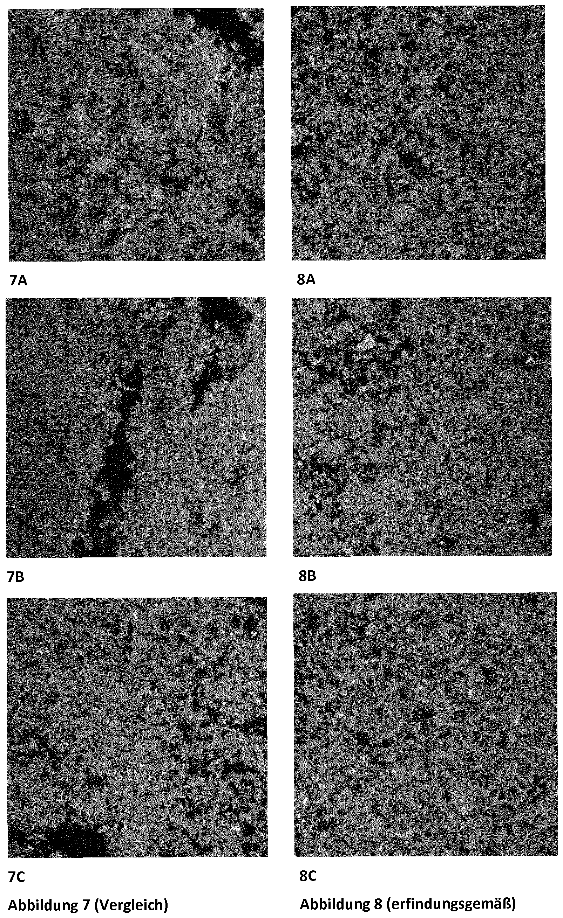

**Abbildung 7****:** Standard (63er)
**Abbildung 8****:** Erfindungsgemäß (63er)

### BEISPIEL 3, VERGLEICHSBEISPIEL V3

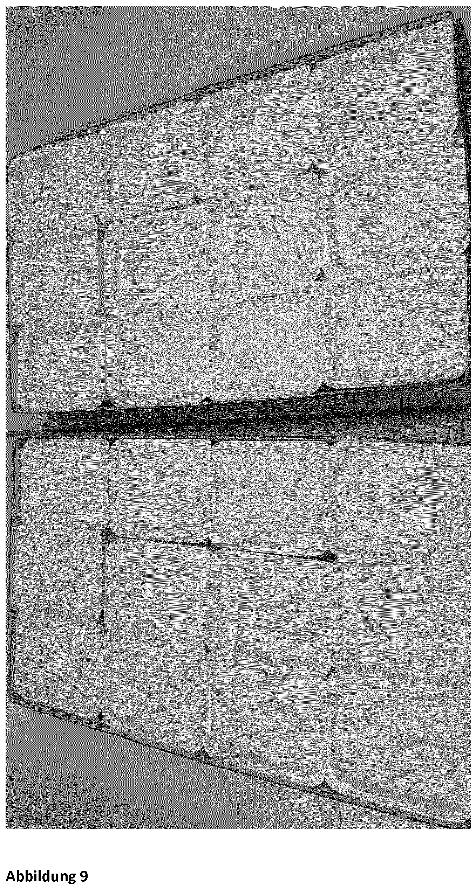

**Abbildung 9** zeigt auf der linken Seite ein 12er Tray mit erfindungsgemäßen Quarkchargen, rechts mit konventionellen. Deutlich zu erkennen ist, dass die Vergleichsprodukte einen flächigen Dosierkegel aufweisen, während die erfindungsgemäßen Produkte praktisch plan sind.

## Patentansprüche

1. Verfahren zur Herstellung von Weißkäse oder Speisequark mit verminderter Abscheidung von darin enthaltenen Flüssigkeiten, umfassend die folgenden Schritte:
(a) Bereitstellen eines Weißkäses oder eines Speisequarks mit einer darin enthaltenen Menge an eingeschlossener Flüssigkeit und
(b) Abfüllen des Weißkäses oder des Speisequarks in die Endverpackung,
**dadurch gekennzeichnet, dass** man während der Abfüllung Schwingungsenergie mit einer Frequenz im Bereich von 10 bis 1.000 Hz in den Weißkäse oder den Quark einträgt.

2. Verfahren nach Anspruch 1, **dadurch gekennzeichnet, dass** man Schwingungsenergie mit sinusförmigem Verlauf einträgt.

3. Verfahren nach mindestens einem der Ansprüche 1 bis 2, **dadurch gekennzeichnet, dass** man die Schwingungsenergie mit horizontalen und/oder vertikalen Schwingungen einträgt.

4. Verfahren nach mindestens einem der Ansprüche 1 bis 3, **dadurch gekennzeichnet, dass** man die Schwingungsenergie mit einer Frequenz im Bereich von 20 bis 70 Hz einträgt.

5. Verfahren nach mindestens einem der Ansprüche 1 bis 4, **dadurch gekennzeichnet, dass** man die Schwingungsenergie über einen Zeitraum von 1 bis 30 Sekunden einträgt.

6. Verfahren nach mindestens einem der Ansprüche 1 bis 5, **dadurch gekennzeichnet, dass** man die Endverpackungen entweder einzeln oder nach Einsetzen in eine Transportpalette rüttelt.

## Claims

1. A process for the production of fresh cheese or quark exhibiting a reduced separation of liquids contained therein, comprising the following steps:
(a) providing a fresh cheese or quark having an amount of enclosed liquid contained therein, and
(b) filling the fresh cheese or quark into the final packaging,
**characterized in that** vibrational energy with a frequency in the range of 10 to 1.000 Hz. is introduced into the fresh cheese or quark during the filling process.

2. The process according to claim 1, **characterized in that** vibrational energy having a sinusoidal course is introduced.

3. The process according to at least one of claims 1 to 2, **characterized in that** the vibrational energy is introduced using horizontal and/or vertical vibrations.

4. The process according to at least one of claims 1 to 3, **characterized in that** the vibrational energy is introduced with a frequency in the range of 20 to 70 Hz.

5. The process according to at least one of claims 1 to 4, **characterized in that** the vibrational energy is introduced for a period of 1 to 30 seconds.

6. The process according to at least one of claims 1 to 5, **characterized in that** the final packaging units are vibrated either individually or after inserting them into a transport pallet.

## Revendications

1. Procédé de production de fromage blanc avec dépôt réduit de liquides contenus dans celui-ci, le procédé comprenant les étapes suivantes :
(a) fournir un fromage blanc contenant une quantité de liquide inclus et
(b) introduire le fromage blanc dans l'emballage final,
**caractérisé en ce que**, pendant l'introduction, de l'énergie vibratoire d'une fréquence située dans la gamme de 10 à 1000 Hz est injectée dans le fromage blanc.

2. Procédé selon la revendication 1, **caractérisé en ce que** l'on injecte de l'énergie vibratoire d'allure sinusoïdale.

3. Procédé selon l'une au moins des revendications 1 et 2, **caractérisé en ce que** l'on injecte l'énergie vibratoire avec des vibrations horizontales et/ou verticales.

4. Procédé selon l'une au moins des revendications 1 à 3, **caractérisé en ce que** l'on injecte l'énergie vibratoire à une fréquence dans la gamme de 20 à 70 Hz.

5. Procédé selon l'une au moins des revendications 1 à 4, **caractérisé en ce que** l'on injecte l'énergie vibratoire sur une durée de 1 à 30 secondes.

6. Procédé selon l'une au moins des revendications 1 à 5, **caractérisé en ce que** l'on secoue les emballages finaux soit individuellement soit après insertion dans une palette de transport.
